(19) **Europäisches Patentamt / European Patent Office / Office européen des brevets**

(11) **EP 4 657 381 A1**

(12) **EUROPEAN PATENT APPLICATION**
published in accordance with Art. 153(4) EPC

(43) Date of publication:
**03.12.2025 Bulletin 2025/49**

(21) Application number: **24769633.9**

(22) Date of filing: **09.01.2024**

(51) International Patent Classification (IPC):
**G06T 17/00** (2006.01)   **G06T 7/00** (2017.01)
**G06T 7/11** (2017.01)

(52) Cooperative Patent Classification (CPC):
**G06T 7/00; G06T 7/11; G06T 7/68; G06T 17/00**

(86) International application number:
**PCT/CN2024/071317**

(87) International publication number:
**WO 2024/187937 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2023 CN 202310255062**

(71) Applicant: **Microimaging (Shenzhen) Medical
Equipment Co., Ltd
Shenzhen, Guangdong 518110 (CN)**

(72) Inventors:
• **CHEN, Zhiwei**
  **Shenzhen, Guangdong 518110 (CN)**
• **HE, Qing**
  **Shenzhen, Guangdong 518110 (CN)**
• **YANG, Liuen**
  **Shenzhen, Guangdong 518110 (CN)**
• **CHEN, Haiping**
  **Shenzhen, Guangdong 518110 (CN)**
• **HE, Zhihua**
  **Shenzhen, Guangdong 518110 (CN)**

(74) Representative: **Murgitroyd & Company
165-169 Scotland Street
Glasgow G5 8PL (GB)**

(54) **BLOOD VESSEL RECONSTRUCTION METHOD AND APPARATUS, COMPUTER DEVICE, AND READABLE STORAGE MEDIUM**

(57) The present application relates to a blood vessel reconstruction method and apparatus, a computer device and a readable storage medium. The method includes: obtaining a plurality of intravascular ultrasound images of a target object (S202); binarizing each of the intravascular ultrasound images to obtain corresponding binary images (S204); traversing pixels of each of the binary images to select the pixels that meet a preset condition as target pixels, and delineating lumen edges of a blood vessel based on the target pixels to obtain segmented regions of interest (S206); obtaining coordinates of a center point of each of the regions of interest based on the segmented regions of interest (S208); constructing a centerline of the blood vessel based on all the obtained coordinates of the center points (S210); and reconstructing the blood vessel by arranging each of the intravascular ultrasound images along the centerline in a preset order (S212). The present application can pick out the pixels with more distinct lumen edge features, improving delineating accuracy, ensuring that the reconstructed three-dimensional model of the blood vessel is close to its actual condition, thus providing doctors with more effective information about the blood vessel.

Obtaining intravascular ultrasound images of a target object — S202

Binarizing each of the intravascular ultrasound images to obtain corresponding binary images — S204

Traversing pixels of each of the binary images to select the pixels that meet a preset condition as target pixels, and delineating a lumen edge of a blood vessel to obtain a segmented region of interest — S206

obtaining coordinates of a center point of each region of interest based on the segmented regions of interest — S208

Constructing a centerline of the blood vessel based on all the obtained coordinates of the center points — S210

Reconstructing the blood vessel by arranging each of the intravascular ultrasound images along the centerline in a preset order — S212

FIG. 2

## Description

The present application claims priority to Chinese Patent application No. 202310255062.6 filed with the Chinese Patent Office on March 16, 2023, entitled "BLOOD VESSEL RECONSTRUCTION METHOD AND APPARATUS, COMPUTER DEVICE, AND READABLE STORAGE MEDIUM", which is incorporated herein by reference in its entirety.

## TECHNICAL FIELD

The present application relates to the field of image processing technologies, and particularly to a blood vessel reconstruction method and apparatus, a computer device, and a readable storage medium.

## BACKGROUND

Intravascular ultrasound (IVUS), as a highly efficient technique for detecting intravascular tissue structures, can provide cross-sectional information of blood vessels with high spatiotemporal resolution.

However, affected by blood, blood spots are prone to appear in the intravascular cross-sectional images acquired by current IVUS probes, which makes the identification of vascular lumen edges more dependent on doctors' experience. Meanwhile, the current IVUS probes can only scan the tissue information in vascular lumens and around blood vessel walls, and cannot directly and accurately obtain the curvatures of tested blood vessels. In addition, the current mainstream IVUS systems present vascular tissue information based on two-dimensional tomography sequences, and as a result, some three-dimensional lesions may be small or of low pixel values in single-frame two-dimensional images. It can only rely on the doctor's knowledge of the vascular tissue structure and the usage experience of the IVUS systems to identify suspicious information from multiple consecutive independent images.

Therefore, in order to avoid subjective differences among doctors and to reduce missed diagnoses, there is an urgent need for a technical solution capable of accurately obtaining vascular information.

## SUMMARY

In view of this, it is necessary to provide a blood vessel reconstruction method and apparatus, a computer device, and a readable storage medium with respect to the foregoing technical problems, aiming to solve the problem that the blood vessel information is inaccuracy in intravascular cross-sectional images obtained by conventional IVUS probes.

The first aspect of the present application provides a blood vessel reconstruction method, including:

    obtaining a plurality of intravascular ultrasound images of a target object;
    binarizing each of the intravascular ultrasound images to obtain corresponding binary images;
    traversing pixels of each of the binary images to select the pixels that meet a preset condition as target pixels, and delineating lumen edges of a blood vessel based on the target pixels to obtain segmented regions of interest;
    obtaining coordinates of a center point of each of the regions of interest based on the segmented regions of interest;
    constructing a centerline of the blood vessel based on all the obtained coordinates of the center points; and
    reconstructing the blood vessel by arranging each of the intravascular ultrasound images along the centerline in a preset order.

In an embodiment, the step of binarizing each of the intravascular ultrasound images to obtain the corresponding binary images includes:

    denoising each of the intravascular ultrasound images, and sharpening the denoised images; and
    binarizing the sharpened images using a KMeans algorithm to obtain the corresponding binary images.

In an embodiment, the step of binarizing includes:

    selecting a plurality of pixels from each of the intravascular ultrasound images or the sharpened images as sample pixels;
    selecting two initial center pixels from the sample pixels, and calculating similarities between each of the initial center pixels and each of the sample pixels other than the initial center pixels;
    classifying the sample pixels according to the similarities; and
    labeling the sample pixels to obtain the binary image according to a classification result.

In an embodiment, a step after obtaining the binary images includes:
dilating the binary images, performing median filtering processing on the dilated binary images, and traversing the pixels of each of the median filtered binary images.

In an embodiment, the binary images include a plurality of single-frame images, and each single-frame image includes a plurality of scan lines; and
the step of traversing pixels of each of the binary images to select the pixels that meet a preset condition as target pixels, delineate the lumen edges of the blood vessel based on the target pixels to obtain the segmented regions of interest includes:

selecting a plurality of pixels from each of the scan lines as sampling points;
traversing the sampling points on each of the scan lines, and selecting the sampling points labeled with a first identifier and meeting a first preset condition as first target pixels;
identifying edge regions of a catheter and a halo artifact in each of the binary images based on the first target pixels;
selecting the sampling points labeled with a second identifier and meeting a second preset condition as second target pixels from the scan lines within the edge region, where the second identifier is different from the first identifier, and both are selected from 0 or 1; and
delineating the lumen edges of the blood vessel according to the second target pixels.

In an embodiment, the step of selecting the sampling points labeled with the first identifier and meeting the first preset condition as the first target pixels includes:

obtaining pixel values of all the sampling points; and
calculating an average pixel value $a$ of a first preset number of preceding sampling points before each of the sampling points labeled with the first identifier, and an average pixel value b of a second preset number of succeeding sampling points after each of the sampling points labeled with the first identifier, and taking the sampling point as the first target pixel when the average pixel value $a$ is greater than a first preset threshold and the average pixel value $b$ is less than a second preset threshold, where the first and second preset thresholds each range from 0 to 1.

In an embodiment, the step of selecting the sampling points labeled with the second identifier and meeting the second preset condition as the second target pixels includes:

obtaining pixel values of the sampling points within the edge region; and
calculating an average pixel value c of a third preset number of preceding sampling points before each of the sampling points labeled with a second identifier, and an average pixel value d of a fourth preset number of succeeding sampling points after each of the sampling points labeled with the second identifier, and taking the sampling point as the second target pixel when the average pixel value c is greater than a third preset threshold and the average pixel value d is less than a fourth preset threshold, where the third and fourth preset thresholds each range from 0 to 1.

In an embodiment, the step of obtaining the coordinates of the center point of each of the regions of interest based on the segmented regions of interest includes:

calculating coordinates of a center of the largest inscribed circle of the region of interest based on the lumen edges of the region of interest; and
determining the coordinates of the center point of the region of interest based on the center coordinates.

In an embodiment, the step of determining the coordinates of the center point of the region of interest based on the center coordinates includes:

taking the center coordinates as the coordinates of the center point of the region of interest;
or
taking the center coordinates of a first frame of the intravascular ultrasound images as the coordinates of the center point of the first frame, determining coordinates in a current frame of the intravascular ultrasound images corresponding to the coordinates of the center point in a previous frame of the intravascular ultrasound images, obtaining coordinates of all pixels within a preset range around the corresponding coordinates in the current frame, calculating a minimum distance between each of the pixels and the lumen edge of the region of interest based on the coordinates of the pixels to obtain a first distance set; and
determining the coordinates of the pixel corresponding to the maximum distance value in the first distance set as the coordinates of the center point of the region of interest in the current frame.

In an embodiment, the step of constructing the center line of the blood vessel based on all the obtained coordinates of the center points includes:
performing polynomial fitting on the coordinates of the center points to obtain the center line of the blood vessel.

In an embodiment, the step of reconstructing the blood vessel by arranging each of the intravascular ultrasound images along the centerline in the preset order includes:

arranging each of the intravascular ultrasound images along the centerline frame by frame, where the arranged intravascular ultrasound images are orthogonal to the centerline; and
filling three-dimensional space between each of the intravascular ultrasound images using an interpolation method to obtain the reconstructed three-dimensional model of the blood vessel.

The second aspect of the present application provides a blood vessel reconstruction apparatus, including:

a receiving module configured to obtain intravascular ultrasound images of a target object;
a processing module configured to binarize each of the intravascular ultrasound images to obtain corresponding binary images;
a segmentation module configured to traverse pixels of each of the binary images to select the pixels that meet a preset condition as target pixels, and delineate lumen edges of a blood vessel based on the target pixels to obtain segmented regions of interest;
a centerline construction module configured to obtain coordinates of a center point of each of the regions of interest based on the segmented regions of interest, and construct a center line of the blood vessel based on all the obtained coordinates of the center points; and
a blood vessel reconstruction module configured to reconstruct the blood vessel by arranging each of the intravascular ultrasound images along the centerline in a preset order.

The third aspect of the present application provides a computer device, including a memory and a processor. The memory stores a computer program. The processor, when executing the computer program, is configured to implement steps of the blood vessel reconstruction method in the first aspect.

The fourth aspect of the present application provides a computer-readable storage medium having a computer program stored thereon. The computer program, when executed by a processor, implements steps of the blood vessel reconstruction method in the first aspect.

The above-described blood vessel reconstruction method and apparatus, computer device and readable storage medium have at least the following advantages.

The present application first processes the intravascular ultrasound images of the target object, picks out the target pixels representing the lumen edge of the blood vessel, and delineates the lumen edge based on the picked identification points to obtain the segmented blood vessel. Subsequently, the centerline of the blood vessel is constructed from the segmented blood vessel to reconstruct the blood vessel. By adopting the above solution, pixels with more distinct lumen edge features can be picked out, improving the accuracy of the delineation, and making the reconstructed three-dimensional model close to the actual condition of the blood vessel, which provides doctors with more effective information about the blood vessel.

**BRIEF DESCRIPTION OF THE DRAWINGS**

The drawings forming a part of the application are adopted to provide further understanding of the application, and schematic embodiments of the application and description thereof are adopted to explain the application and not intended to form improper limitations of the application.

To describe the technical solutions of embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without inventive effort.

FIG. 1 is an application environment diagram of a blood vessel reconstruction method in an embodiment.
FIG. 2 is a schematic flowchart of a blood vessel reconstruction method in an embodiment.
FIG. 3 is a schematic flowchart of steps for obtaining a binary image through processing in an embodiment.
Figure (a) in FIG. 4 is an original intravascular ultrasound image in an embodiment.
Figure (b) in FIG. 4 is a preprocessed intravascular ultrasound image in another embodiment.
Figure (c) in FIG. 4 is a binary image processed by the KMeans algorithm in another embodiment.
Figure (d) in FIG. 4 is a binary image after dilation processing in another embodiment.

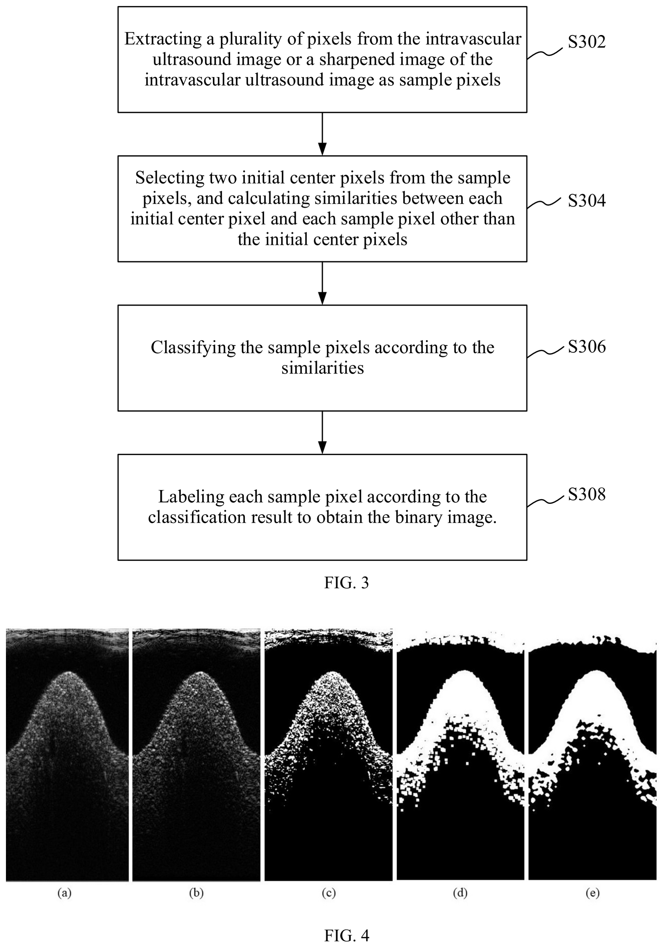

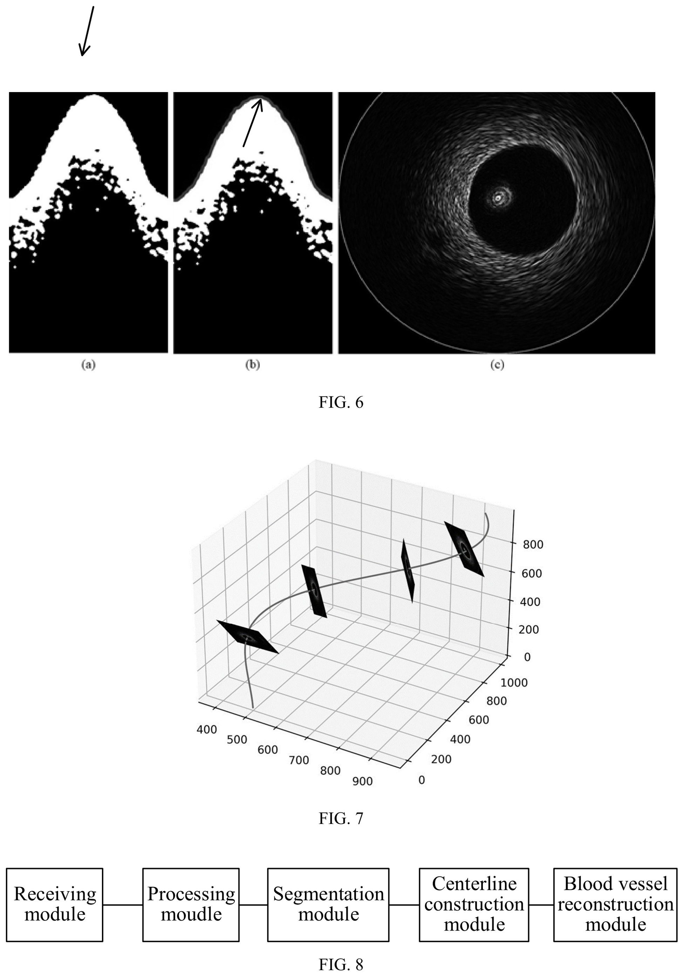

Figure (e) in FIG. 4 is a binary image after median filtering processing in another embodiment.

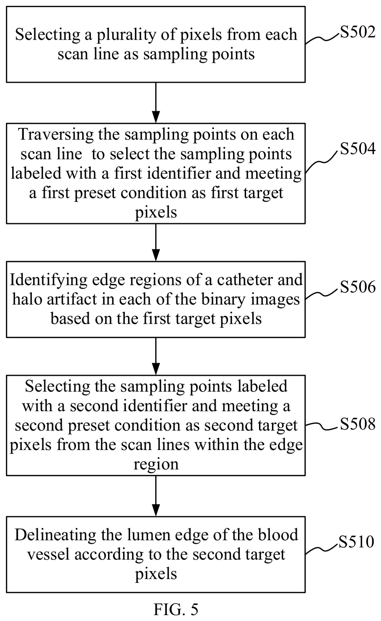

FIG. 5 is a schematic flowchart of steps for traversing pixels of a binary image in an embodiment.
Figure (a) in FIG. 6 is a structural schematic diagram of an edge region in an embodiment.
Figure (b) in FIG. 6 is a structural schematic diagram of a lumen edge in another embodiment.
Figure (c) in FIG. 6 is a schematic diagram of a segmented single-frame image in another embodiment.
FIG. 7 is a schematic diagram of arranging intravascular ultrasound images to a centerline in an embodiment.
FIG. 8 is a structural block diagram of a vascular reconstruction apparatus in an embodiment.

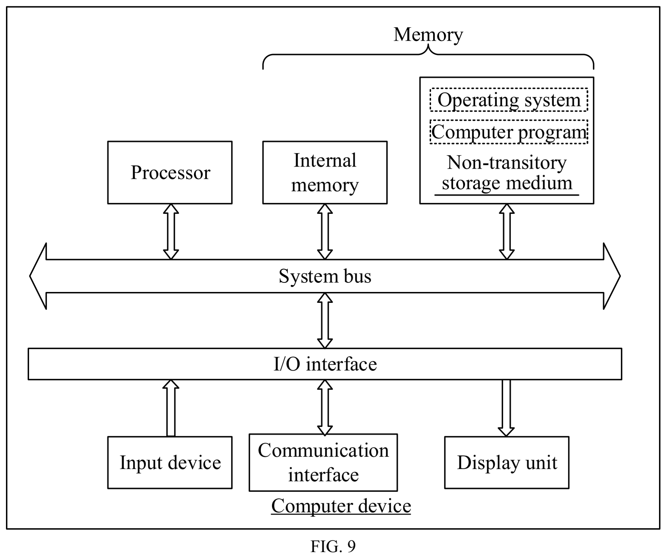

FIG. 9 is an internal structure diagram of a computer device in an embodiment.

**DESCRIPTION OF EMBODIMENTS**

Implementations of the present disclosure are illustrated below with particular and specific examples, and persons skilled in the art can easily understand other advantages and efficacy of the present disclosure from the content disclosed in the specification. The present disclosure can further be implemented or applied through other different specific implementations, and details in the present specification can also be modified or changed in various ways based on different opinions and applications without departing from the spirit of the present application. It should be noted that the following embodiments and features in the embodiments can be combined with each other without conflict.

Some exemplary embodiments of the present disclosure are described for illustrative purposes. It is to be understood that the present disclosure can be realized by other implementations that are not specifically shown in the drawings.

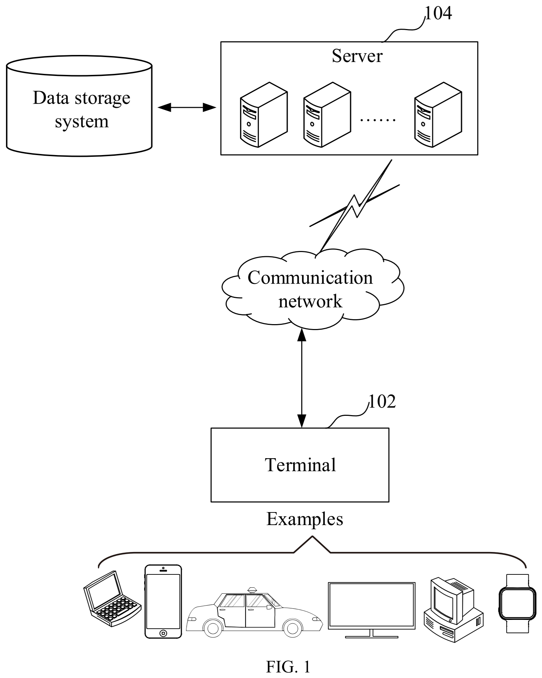

The blood vessel reconstruction methods provided by embodiments of the present application may be applied in an application environment shown in FIG. 1. In the application environment, a terminal 102 communicates with a server 104 via a network. A date storage system may store data that a server 104 needs to process. The data storage system may be integrated into the server 104 or may be placed on cloud servers or other network servers.

In the embodiments, the terminal 102 can send a plurality of intravascular ultrasound images of a target object to the server 104, so that the server 104 can process each intravascular ultrasound image. For example, the server 104 binarizes each of the intravascular ultrasound images to obtain the corresponding binary images. Pixels of each binary image are traversed, and the pixels that meet a preset condition are taken as target pixels. A lumen edge of a blood vessel is then delineated based on the target pixels to obtain a segmented region of interest. Based on the segmented region of interest, coordinates of a center point of each region of interest are obtained. Based on all the obtained coordinates of the center points, a centerline of the blood vessel is constructed. The plurality of intravascular ultrasound images are arranged along the centerline in a preset order to reconstruct the blood vessel. Then, the server 104 feeds the reconstructed blood vessel back to the terminal 102.

In embodiments, the terminal 102 may include, but is not limited to, a variety of personal computers, laptops, smartphones, tablets, IoT devices, and portable wearable devices. The IoT devices may include smart speakers, smart TVs, smart air conditioners, in-vehicle smart devices, and so on. The portable wearable devices may include smartwatches, smart wristbands, head-mounted devices, and so on. The server 104 may be implemented as an independent server or a server cluster composed of multiple servers.

In an embodiment, the present application provides a blood vessel reconstruction method, which is illustrated below with an example applied to the server in FIG. 1.

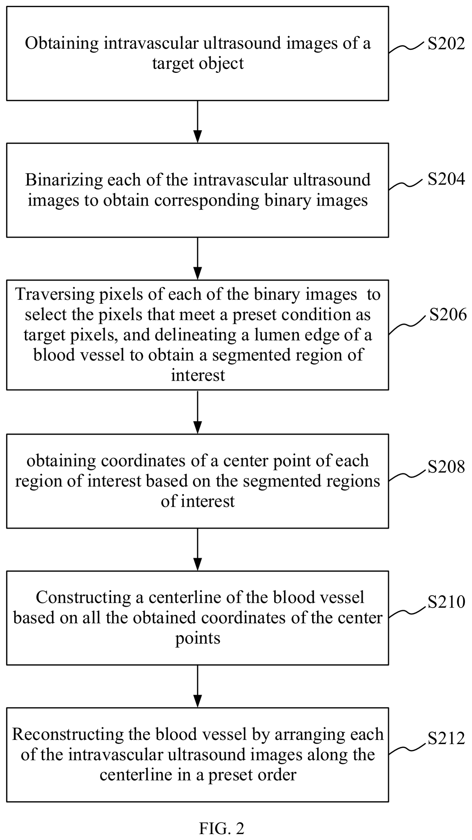

Referring to FIG. 2, which is a schematic flowchart of a blood vessel reconstruction method in the present embodiment, the method specifically includes the following steps.

In step S202, intravascular ultrasound images of a target object are obtained.

In an embodiment, the intravascular ultrasound images of the target object are obtained through intravascular ultrasound imaging technology. A miniature IVUS probe is delivered into the blood vessel lumen via catheterization, allowing an operator to view real-time cross-sectional images of the lumen and vessel wall on a display interface. Meanwhile, the cross-sectional images can be automatically saved frame by frame during operation, and the collection of these cross-sectional images forms the intravascular ultrasound images in the present embodiment.

In step S204, each of the intravascular ultrasound images is binarized to obtain corresponding binary images.

In an embodiment, binarizing each of the intravascular ultrasound images to obtain corresponding binary images involves, by selecting an appropriate threshold, converting intravascular ultrasound images with 256 brightness levels into binary images that can still reflect the overall and local features of the images. As such, when conducting subsequent processing on intravascular ultrasound images, the properties of the image collection relate only to the positions of pixels with pixel values of 0 or 1, and no longer involve multi-level values of pixels, thereby reducing the difficulty of subsequent processing.

In an embodiment, before binarizing the intravascular ultrasound images, each of the intravascular ultrasound images is preprocessed to reduce the interference of noise in subsequent processing. The preprocessing method can be selected as needed, such as denoising and enhancing image sharpness. It should be understood that image denoising is used to remove noise generated during image acquisition, transmission, or compression, thereby improving image clarity. Sharpness enhancement involves using mathematical formulas or algorithms to increase the brightness of relatively bright pixels or decrease the brightness of relatively dark pixels in local areas of the image, making the edges of objects in the image more distinct and facilitating subsequent image segmentation.

In step S206, pixels of each of the binary images are traversed. The pixels that meet a preset condition are selected as target pixels, and a lumen edge of a blood vessel is delineated based on the target pixels to obtain a segmented region of interest.

In an embodiment, if a specific object in the binary image, such as a vessel wall or lumen in the present embodiment, has a uniform grayscale value and is situated against a uniform background with a different grayscale value, by selecting an appropriate threshold, pixels in the binary image can be classified to pick out the pixels meeting a first preset condition. For example, the pixels belonging to the same class can be selected and delineated to separate the vessel wall and lumen, thereby obtaining the segmented region of interest in the blood vessel.

In step S208, coordinates of a center point of each region of interest are obtained based on the segmented regions of interest.

In step S210, a centerline of the blood vessel is constructed based on all the obtained coordinates of the center points.

In step S212, the blood vessel is reconstructed by arranging each of the intravascular ultrasound images along the centerline in a preset order.

Specifically, the above steps S202-S206 process each of the intravascular ultrasound images, that is, to separate the wall and lumen of the blood vessel captured by the miniature IVUS probe and obtain a single-frame image with a lumen edge. All pixels within the lumen edge are traversed to calculate a set of minimum Euclidean distances between each pixel and the lumen edge. The coordinates of the pixel corresponding to the maximum value in the set are selected as coordinates of the center point of the single-frame image. Then, coordinates of the center points are sequentially collected in the order of frame numbers, and the centerline of the blood vessel is constructed in the three-dimensional space. Each of the intravascular ultrasound images is arranged at the coordinates of the corresponding center point along the centerline so that the reconstructed blood vessel can be obtained.

In the above-mentioned blood vessel reconstruction method, the intravascular ultrasound images of the target object are processed first to obtain binary images. Then, by applying a preset condition according to image recognition requirements, pixels in the binary images are filtered to pick out target pixels that represent the lumen edge of the blood vessel, and the lumen edge is delineated based on the picked target pixels to obtain the segmented region of interest. As such, the centerline of the blood vessel is constructed based on the segmented regions of interest, and then the blood vessel is reconstructed. By adopting the above-mentioned method, pixels with more lumen edge features can be selected, thereby improving the delineating accuracy, ensuring that the reconstructed three-dimensional model of the blood vessel is close to its actual condition. Consequently, it provides doctors with more effective information about the blood vessels.

Referring to FIG. 3, in an embodiment, processing the intravascular ultrasound images to obtain the binary images includes the following operations.

In step S302, a plurality of pixels are extracted from the intravascular ultrasound image or a sharpened image of the intravascular ultrasound image as sample pixels.

In step S304, two initial center pixels are selected from the sample pixels, and similarities between each initial center pixel and each sample pixel other than the initial center pixels are calculated.

In step S306, the sample pixels are classified according to the similarities.

In step S308, each sample pixel is labeled according to the classification result to obtain the binary image.

Specifically, a plurality of pixels are extracted from each intravascular ultrasound image or sharpened image as sample pixels, the similarity for each sample pixel is calculated, the pixels belonging to the same region or tissue are divided into the same class, and then the wall and lumen region of the blood vessel are separated.

Generally, the basic idea of the region-based segmentation method is to first find a target region from the intravascular ultrasound image as the seed target region, and then, according to a preset similarity standard, target regions in the neighborhood around the seed target region that have the same or similar properties as the seed target region are merged into the region where the seed target region is located. The above process continues with these new target regions as new seed target regions, until no more target regions that meet the condition can be included. The implementation includes a variety of algorithms, such as a threshold segmentation algorithm, a region growth algorithm and a region merging algorithm. In the present embodiment, a KMeans clustering algorithm is used to classify the intravascular ultrasound images to obtain binary images. The KMeans clustering algorithm includes the following steps.

In step 1, initial center pixel values of k clusters are randomly selected.

In step 2, the sample pixel values in a cross-sectional image are traversed to calculate the Euclidean distances from each sample pixel value to the k center pixel values, and the corresponding pixels are classified into the clusters with the shortest Euclidean distance.

In step 3, the mean values of the pixel values of the k clusters are calculated to update the center pixel values.

In step 4, step 2 and step 3 are iterated until the center pixel values remain unchanged, and then the iteration ends.

In step 5, the same pixel value is assigned to the pixels belonging to the same cluster.

By adopting the above-mentioned method, the intra-cluster similarities of the sample pixels in each cross-sectional image can be calculated, the sample pixels are classified according to the regions, and the pixels in the same region are assigned the same pixel value according to the classification result. For example, when k=2, the 0-cluster pixel value is assigned 0, and the 1-cluster pixel value is assigned 1. Thus, the regions of the wall and lumen of the blood vessel are separated, and a binary image is obtained.

Referring to FIG. 4, the figure (a) in FIG.4 shows the original intravascular ultrasound image with low noise spots and high noise spots. After performing the aforementioned preprocessing, such as denoising and image sharpness enhancement, some noise still has not been completely filtered out, as illustrated in the figure (b). As a result, there are still a small number of isolated spots in the intravascular ultrasound images after being processed by the KMeans algorithm, as shown in the figure (c). In order to improve the accuracy of the subsequent lumen edge delineation, the present application further processes the binary images that has already been processed by the KMeans algorithm, and the processing methods include dilation processing and median filtering processing. Specifically, firstly, the binary image is dilated with a 5×5 kernel size, and then median filtering is performed on the dilated binary image. It should be understood that image dilation involves adding pixel values to the edges of the image, causing an expansion of the overall pixel values to achieve a dilation effect, thereby filling holes along the edges of the target or holes inside the target. On the basis of the dilated image, the median filtering process is further performed, that is, pixel values of a pixel and its surrounding adjacent pixels (there are an odd number of pixels in totally) in a digital image or digital sequence are selected, and these pixel values are sorted. Then, a median pixel value is taken as the pixel value of the current pixel, making the surrounding pixel values close to the real values, thereby eliminating the isolated noise points. The figure (d) in FIG.4 is a binary image after dilation processing, and the figure (e) in FIG.4 is a binary image after median filtering, which shows that the edge of the binary image in the figure (e) is smoother, resulting in a higher recognition accuracy of the lumen edge.

Referring to FIG.5, in an embodiment, traversing the pixels of the binary image to select the pixels that meet the preset condition as the target pixels, and delineating the lumen edge of the blood vessel according to the target pixels, includes the following steps.

In step 502, a plurality of pixels are selected from each scan line as sampling points.

In step 504, the sampling points on each scan line are traversed to select the sampling points labeled with a first identifier and meeting a first preset condition as first target pixels.

In step 506, edge regions of a catheter and halo artifact in each of the binary images are identified based on the first target pixels.

In step 508, the sampling points labeled with a second identifier and meeting a second preset condition are selected as second target pixels from the scan lines within the edge region, where the second identifier is different from the first identifier, and both are selected from 0 or 1.

In step 510, the lumen edge of the blood vessel is delineated according to the second target pixels.

Specifically, since the intravascular ultrasound images are a series of consecutively captured cross-sectional images, the corresponding binary images obtained from processing the IVUS images include multiple single-frame images. Moreover, each IVUS image and each single-frame binary image are in a strict one-to-one, frame-by-frame correspondence. Further, a single-frame image includes a plurality of scan lines, and a plurality of pixels are selected from each scan line as sampling points. It should be understood that these sampling points have been assigned pixel values according to the classification results in the aforementioned binarization. For example, the sampling points labeled with the first identifier are the pixels with a pixel value of 0, and the sampling points labeled with the second identifier are the pixels with a pixel value of 1. For each scan line, starting from the first sampling point, each of the sampling points is traversed downward, and the sampling points that meet the first preset condition are selected as target pixels for the subsequent lumen edge delineation, thereby picking out the pixels related to the lumen edge in the binary images from a large number of irrelevant pixels.

In an embodiment, the sampling points on one scan line may be first selected and traversed, and then the sampling points that meet the first preset condition are picked out before performing the same operation on the next scan line, until each single-frame image is completed.

Generally speaking, blood vessel segmentation methods include conventional segmentation methods, such as feature-based segmentation methods, region-based segmentation methods, and deep learning-based segmentation methods that have been mainly studied in recent years. The conventional segmentation methods suffer from a significant decline in accuracy when confronted with more complex vascular environments or special scenarios, such as the catheter being too close to the vessel wall. While deep learning-based segmentation methods demonstrate superior performance in complex vascular conditions, they rely heavily on large volumes of image data and manual annotations, leading to higher computational complexity. In view of this, the present application combines feature-based segmentation and region-based segmentation methods. First, a region-based segmentation method is employed to classify pixels in the binary image, separating the vascular lumen from the vessel wall. Subsequently, based on this classification, a feature-based segmentation method is applied to delineate the edge of the vascular lumen, thereby obtaining the segmented blood vessel. A detailed explanation is as follows.

Referring to FIG. 6, to reduce misidentification, the present embodiment first identifies the edge regions of the catheter and the halo artifact. Further, based on the identification of the edge regions, the lumen edge of the blood vessel is subsequently identified. Specifically, for each scan line in a single-frame image, traversing is performed starting from the first sampling point downward to pick out sampling points labeled with the first identifier as first-class target pixels. It should be understood that the first identifier and the second identifier herein correspond to pixel values of different pixel classes. For example, if the first identifier is 0, all sampling points with values of 0 on the scan line are identified and delineated, thereby forming the edge regions of the catheter and the halo artifact, as indicated by the arrow in the figure (a) in FIG.6.

In an embodiment, isolated pixels may still exist in the catheter and halo artifact region, leading to misidentification of edge pixels of the catheter and halo artifact. Therefore, after identifying a sampling point labeled with the first identifier, it is further determined whether the sampling point meets the first preset condition. If it meets the condition, the sampling point is picked out as the first-class target pixel; otherwise, traversing continues downward.

In an embodiment, the determination of whether the sampling points meet the first preset condition includes the following operations.

All sampling points in the binary image are traversed to obtain their pixel values, and an average pixel value $a$ of a first preset number of preceding sampling points before each sample point labeled with the first identifier and an average pixel value b of a second preset number of succeeding sampling points after the sample point labeled with the first identifier are calculated. When the average pixel value $a$ is greater than a first preset threshold and the average pixel value $b$ is less than a second preset threshold, the sampling point meets the first preset condition. The first and second preset thresholds range from 0 to 1.

Further, from each scan line within the edge regions of the catheter and halo artifact, sampling points labeled with the second identifier are picked out as second target pixels. For example, if the second identifier is 1, all sampling points with values of 1 on the scan line are identified and delineated, thereby forming the lumen edge of the blood vessel, as indicated by the arrow in the figure (b) in FIG. 6.

In an embodiment, after the approximate regions of the catheter and halo artifact are identified, isolated pixels may still exist within the lumen, leading to misidentification of lumen edge points. Therefore, after identifying a sampling point labeled with the second identifier, it is further determined whether the sampling point meets the second preset condition. If it meets the condition, the sampling point is picked out as a second target pixel; otherwise, traversing continues downward.

In an embodiment, the determination of whether the sampling points meet the second preset condition includes the following operations.

All sampling points in the edge regions are traversed to obtain their pixel values, and an average pixel value c of a third preset number of preceding sampling points before each sampling point labeled with the second identifier and an average pixel value d of a fourth preset number of succeeding sampling points after the sampling points labeled with the second identifier are calculated. When the average pixel value c is greater than a third preset threshold and the average pixel value d is less than a fourth preset threshold, the sampling point meets the second preset condition. The third and fourth preset thresholds each range from 0 to 1.

It should be noted that the data involved in the aforementioned first and second preset conditions, such as the first preset number, first preset threshold, and other parameters, can be adjusted according to identification requirements. This embodiment does not impose specific limitations on the numerical values.

The figure (c) in FIG. 6 shows the intravascular ultrasound image after the above segmentation processing. As can be seen in figure (c), the cross-sectional image of the blood vessel after segmentation exhibits a clear lumen edge, which is helpful for a more accurate assessment of the diseased tissue in the subsequent stage.

In an embodiment, obtaining the coordinates of the center point of the region of interest based on the segmented region of interest includes the following operations.

Center coordinates of the largest inscribed circle of the lumen are calculated based on the lumen edge of the region of interest in each single-frame image, and the coordinates of the center point of the region of interest are determined based on the center coordinates.

Specifically, due to the extremely complex vascular trajectories, when the IVUS instrument is imaging, the catheter does not always remain parallel to the vessel wall. Therefore, there are data errors, resulting in errors in the three-dimensional vascular structure obtained if the above-mentioned single-frame images are directly stitched. To obtain the relative positional changes between consecutive frames and achieve a more realistic three-dimensional blood vessel reconstruction to provide doctors with more effective information about the blood vessel to be tested, the following strategy is adopted in the present embodiment to calculate the blood vessel centerline. Assuming that a sphere moves within the blood vessel, with its diameter approximating or even equaling the inner diameter of the vessel, the center of the sphere can be regarded as the center of the blood vessel. The cross-section passing through the center of the sphere is the largest circle of the sphere, and each single-frame image intersects with the centerline of the blood vessel at only one intersection point. Therefore, each frame must contain the largest circle of the sphere. The largest circle is the largest inscribed circle of the blood vessel lumen, and the center of the inscribed circle is the center of the blood vessel.

Specifically, due to the rapid rotational imaging speed of a transducer and the slow withdrawal speed, the differences between adjacent single-frame images are small, and the coordinates of the lumen centers in adjacent frames are relatively close. Based on these characteristics of adjacent frames, the present embodiment manually determines the center point of the blood vessel in the first frame of the lumen edge.

Thus, assuming that there is no serious distortion of the blood vessel and the actual distance between consecutive frames remains constant, determining the coordinates of the center point of the blood vessel based on the center coordinates includes the following operations.

The center coordinates obtained in the above step of calculating the largest inscribed circle of the lumen based on the lumen edge of the region of interest in the first frame are taken as the coordinates of the center point of the blood vessel.

Alternatively, the coordinates of all pixels within a preset range around the center coordinates are obtained, and a first distance set is obtained by calculating the minimum distances between each pixel and the lumen edge of the region of interest. The coordinates of the pixel corresponding to the maximum distance value in the first distance set are taken as the coordinates of the center point of the region of interest.

Furthermore, starting from the center point of the blood vessel in the second frame, the lumen edge in the single-frame images is traversed. The coordinates of all pixels in a next frame within a preset range around the center coordinates of a previous frame are obtained. For example, all pixels within an $11 \times 11$ window centered on the center coordinates of the previous frame are obtained. Coordinates $(x_p, y_p)$ of a pixel are selected, and the Euclidean distance between this point and each lumen edge pixel $(x_l, y_l)$ is calculated to obtain a minimum distance, thereby forming a minimum distance set S. The formula is:

$$s_p = \min\left(\sqrt{(x_p - x_l)^2 + (y_p - y_l)^2}\right), \quad s_p \in S$$

where $s_p$ is the minimum value of the Euclidean distances between the pixel $p$ and the pixels $l$ of the lumen edge.

The maximum value in set S is the radius of the largest inscribed circle corresponding to the center coordinates in the lumen. For example, if $s_p$ has the maximum value, the coordinates $(x_p, y_p)$ of pixel $p$ are recorded as the coordinates of the center point. Furthermore, if the minimum Euclidean distance corresponding to the coordinates of multiple pixel points is equal to the maximum value in the set S, the coordinates closest to the center of the current frame are selected as the coordinates of the center point.

The above steps are repeated to calculate the coordinates of the center point for each single-frame image, and the coordinates of the center points are collected according to the frame-number sequence to obtain a center point collection of the blood vessel.

Based on the center point collection of the blood vessel obtained from the above steps, fitting coefficients are calculated through polynomial fitting. A polynomial equation is determined according to the fitting coefficients. The equations for the blood vessel centerline can be expressed as:

$$\begin{cases} x = f_x(z) \\ y = f_y(z) \\ z = z \end{cases}$$

where $x$ represents the x-axis coordinate of the fitted center point, $y$ represents the y-axis coordinate of the fitted center point, and z represents the *z-th* single-frame image. $f_x(z)$ and $f_y(z)$ represent the mapping functions of the image frame number z and the x-axis coordinate and y-axis coordinate of the center point, respectively.

In the above embodiments, by using the center of the largest inscribed circle of the region of interest as the center of the blood vessel, data errors caused by angular deviation between the catheter and the vessel wall during imaging can be reduced. Meanwhile, based on the initially obtained center coordinates of the inscribed circle, an optimal pixel is further searched for from a preset range around the center coordinates. The coordinates of the optimal pixel are taken as the coordinates of the center point of the blood vessel. This further improves data accuracy, ensuring that the reconstructed three-dimensional model of the blood vessel is close to its actual condition. Consequently, it provides doctors with more effective information about the blood vessels.

In an embodiment, the step of arranging the intravascular ultrasound images along the centerline in the preset order includes arranging each intravascular ultrasound image along the centerline frame by frame, where the arranged cross-sectional images are orthogonal to the centerline.

Referring to FIG. 7, as shown in FIG. 7, each intravascular ultrasound image is arranged along the centerline according to its position determined by the centerline equations. For example, the cross-sectional image corresponding to the pixel $p$ is arranged at the coordinates $(x_p, y_p)$, and it should be ensured that the arranged intravascular ultrasound image is orthogonal to the centerline, thereby obtaining the structure of the three-dimensional model of the blood vessel.

In an embodiment, after the intravascular ultrasound images are arranged along the centerline in the preset order, the method further includes the following operation.

The three-dimensional space between each of the intravascular ultrasound images is filled using an interpolation method, such as quadratic linear interpolation, cubic B-spline interpolation, or similar algorithms, to obtain the reconstructed three-dimensional model of the blood vessel. It should be understood that the three-dimensional model of the blood vessel includes a three-dimensional model of the lumen.

In the above embodiments, by arranging each intravascular ultrasound image frame by frame at the corresponding center point coordinate, the position of each image along the centerline can be accurately determined, enabling the reconstruction of a more realistic three-dimensional vascular structure and obtaining a three-dimensional model with higher precision.

To enable those skilled in the art to fully understand the present application, the steps of the blood vessel reconstruction method of the present application are described in detail below.

Firstly, a plurality of intravascular ultrasound images of a target object are obtained, where the intravascular ultrasound images are cross-sectional images saved frame by frame. After preprocessing the cross-sectional images, such as denoising and enhancing image sharpness, the K-means clustering algorithm is applied to classify the pixel values of each cross-sectional image. Based on the classification results, pixels in regions of the same class are set to the same pixel value, thereby separating the vascular wall and lumen regions to obtain a binary image. Further, to improve the accuracy of subsequent lumen edge delineation, the obtained binary image is further processed, including dilation and median filtering.

Secondly, a plurality of pixels are selected as sampling points from each scan line of the binary image. For each scan line, starting from the first sampling point, the sampling points are traversed downward. Upon identifying a sampling point labeled a first identifier, the sampling point will be selected as a first-class target pixel only if it meets the conditions that the average pixel value of a first preset number of preceding sampling points before the current sampling point is greater than a first preset threshold, and the average pixel value of a second preset number of succeeding sampling points after the current sampling point is less than a second preset threshold. Otherwise, the traversing continues downward until all each scan line is completed. Based on the first-class target pixels, the edge regions of the catheter and the halo artifact are delineated.

Further, on each scan line within the edge regions, starting from the first sampling point, the sampling points are traversed downward. Upon identifying a sampling point labeled with a second identifier, the sampling point will be selected as a second target pixel only if it meets the conditions that the average pixel value of a third preset number of preceding sampling points before the current sampling point is less than a third preset threshold, and the average pixel value of a fourth preset number of succeeding sampling points after the current sampling point is greater than a fourth preset threshold. Otherwise, the traversing continues downward until each scan line is completed. Based on the second target pixels, the lumen edge of the vessel is delineated to obtain the segmented blood vessel.

Moreover, based on the lumen edge in each single-frame image, the center coordinates of the largest inscribed circle of the vascular lumen are calculated, and the coordinates are taken as the coordinates of the center point of the blood vessel. Alternatively, the coordinates of all pixels within a preset range around the center coordinates are obtained, and a first distance set is obtained by calculating the minimum distance between each pixel and the lumen edge of the region of interest. The coordinates of the pixel corresponding to the maximum distance value in the first distance set are taken as the coordinates of the center point of the region of interest. The above steps are repeated to calculate the coordinates of the center point for each single-frame image. The coordinates of the center points are then collected to obtain a center point collection of the blood vessel. Polynomial fitting is applied to the center point collection to obtain the centerline of the blood vessel. The intravascular ultrasound images are arranged frame by frame along the centerline according to the corresponding coordinates of the center points. It should be ensured that each arranged image is orthogonal to the centerline. Finally, interpolation is performed to fill the three-dimensional space between each of the intravascular ultrasound images, thus a reconstructed blood vessel is obtained.

In the above blood vessel reconstruction method, the intravascular ultrasound images of the target object are first processed. Then, based on a region-based segmentation method, morphological operations, and filtering, the pixels of the preprocessed images are labeled to obtain binary images. In addition, based on a feature-based segmentation method, the labeled pixels are filtered for the first time to separate the catheter and halo artifact from the lumen. Building on the above separation result, the pixels are filtered for the second time, and the selected pixels are delineated to identify the vascular wall and obtain the lumen edge, thereby obtaining the segmented blood vessel. By adopting a solution of combining region-based and feature-based segmentation methods, the pixels with more distinct lumen edge features may be picked out, improving delineating accuracy and providing precise parameters for subsequent vascular reconstruction.

Furthermore, based on the segmented lumen edge, the center coordinates of the largest inscribed circle of the vascular lumen are calculated. Then, the coordinates of the center point of the blood vessel are determined based on the center coordinates, reducing data errors caused by angular deviations between the catheter and the vessel wall during imaging, ensuring that the reconstructed three-dimensional model of the blood vessel is close to its actual condition. Consequently, it provides doctors with more effective information about the blood vessel.

It should be understood that although the steps in the flowcharts described in the above embodiments are displayed sequentially as indicated by arrows, these steps are not necessarily performed in the order indicated by the arrows. Unless explicitly stated herein, the execution of these steps is not strictly sequential, and they may be performed in other orders. Moreover, at least some of the steps in the flowcharts described in the above embodiments may include multiple sub-steps or stages, which are not necessarily executed at the same time but may be performed at different times. The execution order of these sub-steps or stages is also not necessarily sequential. They may alternate or interleave with other steps or sub-steps.

Based on the same inventive concept, embodiments of the present application further provide a vascular reconstruction apparatus for performing the above blood vessel reconstruction methods. The problem-solving solution provided by the apparatus is similar to that described in the above-mentioned methods. Therefore, specific limitations in one or more embodiments of the vascular reconstruction apparatus provided below may refer to the limitations of the blood vessel reconstruction methods described above, which will not be repeated here.

Referring to FIG.8, in a possible embodiment, embodiments of the present application provide a blood vessel reconstruction apparatus, including a receiving module, a processing module, a segmentation module, a centerline construction module and a blood vessel reconstruction module.

The receiving module is configured to obtain intravascular ultrasound images of a target object.

The processing module is configured to binarize each of the intravascular ultrasound images to obtain corresponding binary images.

The step of the processing module binarizing each of the intravascular ultrasound images to obtain the corresponding binary images includes the following steps.

In step 1, a plurality of pixels are extracted from the intravascular ultrasound image as sample pixels.

In step 2, two initial center pixels are selected from the sample pixels, and similarities between the initial center pixels and each sample pixel other than the initial center pixels are calculated.

In step 3, the sample pixels are classified according to the similarities.

In step 4, each sample pixel is labeled to obtain a binary image according to the classification result.

In an embodiment, the processing module is further configured to preprocess the intravascular ultrasound images, such as denoising and enhancing image sharpness to enhance the image clarity before the intravascular ultrasound images are binarized.

In an embodiment, the processing module is further configured to process the binary images, such as dilating and median filtering, to remove a small number of isolated pixels in the binary images, thus improving subsequent segmentation accuracy.

The segmentation module is configured to traverse the pixels of each frame of the binarized images, take the pixels that meet a preset condition as the target pixels, and delineate a lumen edge of the blood vessel according to the target pixels to obtain the segmented region of interest.

The step of the segmentation module traversing the pixels of each frame of the binarized images, taking the pixels that meet the preset condition as the target pixels, and delineating the lumen edge of the blood vessel according to the target pixels includes the following steps.

In step 1, a plurality of pixels are selected from each scan line as sampling points.

In step 2, the sampling points on each scan line are traversed to select the sampling points labeled with a first identifier and meeting a first preset condition as first target pixels.

In step 3, edge regions of a catheter and halo artifact in each of the binary images are identified based on the first target pixels.

In step 4, the sampling points labeled with a second identifier and meeting a second preset condition are selected from the scan line within the edge region as second target pixels, where the second identifier is different from the first identifier, and both are selected from 0 or 1.

In step 5, the lumen edge of the blood vessel is delineated according to the second target pixels.

In an embodiment, the method that the segmentation module determines if the sampling point meets the first preset condition includes the following operation.

All the pixels in the binary image are traversed to obtain pixel values of all the sampling points. An average pixel value $a$ of a first preset number of preceding sampling points before each sampling point labeled with the first identifier, and an average pixel value b of a second preset number of succeeding sampling points after each sampling point labeled with the first identifier are calculated. It is determined that the sampling point meets the first preset condition when the corresponding average pixel value $a$ is greater than a first preset threshold and the corresponding average pixel value b is less than a second preset threshold. The first and second preset thresholds range from 0 to 1.

In an embodiment, the method that the segmentation module determines if the sampling point meets the second preset condition includes the following operation.

All the pixels within the edge region are traversed to obtain pixel values of all the sampling points. An average pixel value c of a third preset number of preceding sampling points before each sampling point labeled with a second identifier, and an average pixel value d of a fourth preset number of succeeding sampling points after each sampling point labeled with the second identifier are calculated. It is determined that the sampling point meets the second preset condition when the average pixel value c is greater than a third preset threshold and the average pixel value d is less than a fourth preset threshold. The third and fourth preset thresholds range from 0 to 1.

The centerline construction module is configured to obtain coordinates of a center point of each region of interest based on the segmented regions of interest, and construct a center line of the blood vessel based on all the obtained coordinates of the center points.

Specifically, the step of the centerline construction module obtaining coordinates of the center point of each region of interest based on the segmented regions of interest includes calculating the center coordinates of the largest inscribed circle of the lumen based on the lumen edge in each single-frame image, and determining the coordinates of the center point of the region of interest based on the center coordinates.

In an embodiment, the step of the centerline construction module determining the coordinates of the center point of the region of interest based on the center coordinates includes obtaining coordinates of all pixels within a preset range around the center coordinates, obtaining a first distance set by calculating the minimum distance between each pixel and the lumen edge of the region of interest, and taking the coordinates of the pixel corresponding to the maximum distance value in the first distance set as the coordinates of the center point of the region of interest. The center line of the blood vessel is constructed based on the coordinates of all the center points obtained from the plurality of intravascular ultrasound images.

The blood vessel reconstruction module is configured to arrange each of the intravascular ultrasound images along the centerline in a preset order to reconstruct the three-dimensional model of the blood vessel.

Specifically, the step of the blood vessel reconstruction module arranging each of the intravascular ultrasound images along the centerline in a preset order includes arranging each intravascular ultrasound image along the centerline frame by frame, while ensuring that the arranged cross-sectional images are orthogonal to the centerline.

In an embodiment, after the blood vessel reconstruction module arranges each of the intravascular ultrasound images along the centerline in the preset order, the method further includes filling the three-dimensional space between each of the intravascular ultrasound images using an interpolation method to obtain the reconstructed three-dimensional model of the blood vessel.

In the above vascular reconstruction apparatus, the intravascular ultrasound images of the target object are first processed. Then, based on a region-based segmentation method, morphological operations, and filtering, the pixels of the preprocessed images are labeled to obtain a binary image. In addition, based on a feature-based segmentation method, the labeled pixels are filtered for the first time to separate the catheter and halo artifact from the lumen. Building on the above separation result, the pixels are filtered for the second time, and the picked-up pixels are delineated to identify the vascular wall and obtain the lumen edge, thereby obtaining the segmented blood vessel. By adopting a solution of combining region-based and feature-based segmentation methods, the pixels with more distinct lumen edge features may be filtered out, improving delineating accuracy and providing precise parameters for subsequent vascular reconstruction. Furthermore, based on the segmented lumen edge, the center coordinates of the largest inscribed circle of the vascular lumen are calculated. Then coordinates of the center point are determined based on the center coordinates, reducing data errors caused by angular deviations between the catheter and the vessel wall during imaging, ensuring that the reconstructed three-dimensional model of the blood vessel is close to its actual condition. Consequently, it provides doctors with more effective information about the blood vessels.

Each module in the blood vessel reconstruction apparatus may be implemented entirely or partially through software, hardware, or a combination thereof. Each module can be embedded in or independent of a processor in a computer device in the form of hardware, or can be stored in a memory in the computer device in the form of software, so that the processor can call the software and perform corresponding operations of the modules.

In an embodiment, a computer device is provided. The computer device may be a terminal. A diagram of an internal structure of the computer device may be shown as FIG. 9. The computer device includes a processor, a memory, an input/output interface, a communication interface, a display unit, and an input apparatus. The processor, the memory, and the input/output interface are connected by a system bus. The communication interface, the display unit, and the input device are connected to the system bus via the input/output interface. The processor of the computer device is configured to provide computation and control abilities. The memory of the computer device includes a non-transitory storage medium and an internal memory. The non-transitory storage medium has an operating system and computer programs stored thereon. The internal memory provides an operating environment for the operating system and the computer programs in the non-transitory storage medium. The input/output interface of the computer device is used for exchanging information between the processor and an external device. The communication interface of the computer device is used for wired or wireless communication with an external terminal. The wireless communication may be implemented via Wi-Fi, a mobile cellular network, near field communication (NFC), or another technology. The computer programs are executed by the processor to perform a blood vessel reconstruction method. The display unit of the computer device is configured to form a visually visible picture, and may be a display screen, a projection device, or a virtual reality imaging device. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, a mouse, or the like.

A person skilled in the art may understand that the structure shown in FIG. 9 is merely a block diagram of a partial structure related to a solution in this application, and does not constitute a limitation to the computer device to which the solution in this application is applied. Specifically, the computer device may include more components or fewer components than those shown in FIG. 9, or some components may be combined, or a different component deployment may be used.

In an embodiment, a computer device is provided, including a memory and a processor. The memory has a computer program stored therein. When executing the computer program, the processor implements the steps of the blood vessel reconstruction methods as described above.

In an embodiment, a computer-readable storage medium is provided, having a computer program stored therein. The computer program, when executed by a processor, implements the steps of the blood vessel reconstruction methods as described above.

In an embodiment, a computer program product is provided, including a computer program. The computer program, when executed by a processor, implements the steps of the blood vessel reconstruction methods as described above.

It should be noted that user information (including but not limited to device information of user, personal information of user, and the like) and data (including but not limited to data for analysis, stored data, displayed data, and the like) involved in the present disclosure are authorized by the user or fully authorized by all parties. The collection, use, and processing of the relevant data must comply with the relevant laws, regulations, and standards of the relevant countries and divisions.

A person of ordinary skill in the art may understand that all or some of procedures of the method in the foregoing embodiments may be implemented by computer programs instructing relevant hardware. The computer programs may be stored in a non-transitory computer-readable storage medium. When the computer programs are executed, the procedures of the foregoing method embodiments may be implemented. References to the memory, the storage, the database, or other medium used in the embodiments provided in this application may all include at least one of a non-transitory and a transitory memory. The non-transitory memory may include a read-only memory (ROM), a magnetic tape, a floppy disk, a flash memory, an optical memory, or the like. The transitory memory may include a random access memory (RAM) or an external high-speed cache memory. As an illustration rather than a limitation, the RAM may come in many forms, such as a static random access memory (SRAM) or a dynamic random access memory (DRAM). The database involved in the various embodiments of the present disclosure includes at least one of a relational database and a non-relational database. The non-relational database includes a blockchain-based distributed database, or the like, and the present disclosure is not limited to this. The processor involved in the various embodiments of the present disclosure includes a general-purpose processor, a central processor, a graphics processor, a digital signal processor, a programmable logic unit, a data processing logic unit based on quantum computing, or the like, and the present disclosure is not limited to this.

Technical features of the foregoing embodiments may be randomly combined. To make the description concise, not all possible combinations of the technical features in the foregoing embodiments are described. However, the combinations of these technical features shall be considered as falling within the scope recorded by this specification, provided that no conflict exists.

The foregoing embodiments only describe several implementations of this application specifically and in detail, but cannot be construed as a limitation to the patent scope of this application. For a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. A blood vessel reconstruction method, comprising:

   obtaining a plurality of intravascular ultrasound images of a target object;

binarizing each of the intravascular ultrasound images to obtain corresponding binary images;

traversing pixels of each of the binary images to select the pixels that meet a preset condition as target pixels, and delineating lumen edges of a blood vessel based on the target pixels to obtain segmented regions of interest;

obtaining coordinates of a center point of each of the regions of interest based on the segmented regions of interest;

constructing a centerline of the blood vessel based on all the obtained coordinates of the center points; and reconstructing the blood vessel by arranging each of the intravascular ultrasound images along the centerline in a preset order.

2. The method of claim 1, wherein the step of binarizing each of the intravascular ultrasound images to obtain the corresponding binary images comprises:

denoising each of the intravascular ultrasound images, and sharpening the denoised images; and

binarizing the sharpened images using a KMeans algorithm to obtain the corresponding binary images.

3. The method of claim 1 or claim 2, wherein the step of binarizing comprises:

selecting a plurality of pixels from each of the intravascular ultrasound images or the sharpened images as sample pixels;

selecting two initial center pixels from the sample pixels, and calculating similarities between each of the initial center pixels and each of the sample pixels other than the initial center pixels;

classifying the sample pixels according to the similarities; and

labeling the sample pixels to obtain the binary image according to a classification result.

4. The method of claim 3, wherein a step after obtaining the binary images comprises:
dilating the binary images, performing median filtering processing on the dilated binary images, and traversing the pixels of each of the median filtered binary images.

5. The method of claim 1, wherein

the binary images comprise a plurality of single-frame images, and each single-frame image comprises a plurality of scan lines; and

the step of traversing pixels of each of the binary images to select the pixels that meet a preset condition as target pixels, delineate the lumen edges of the blood vessel based on the target pixels to obtain the segmented regions of interest comprises:

selecting a plurality of pixels from each of the scan lines as sampling points;

traversing the sampling points on each of the scan lines, and selecting the sampling points labeled with a first identifier and meeting a first preset condition as first target pixels;

identifying edge regions of a catheter and a halo artifact in each of the binary images based on the first target pixels;

selecting the sampling points labeled with a second identifier and meeting a second preset condition as second target pixels from the scan lines within the edge region, wherein the second identifier is different from the first identifier, and both are selected from 0 or 1; and

delineating the lumen edges of the blood vessel according to the second target pixels.

6. The method of claim 5, wherein the step of selecting the sampling points labeled with the first identifier and meeting the first preset condition as the first target pixels comprises:

obtaining pixel values of all the sampling points; and

calculating an average pixel value $a$ of a first preset number of preceding sampling points before each of the sampling points labeled with the first identifier, and an average pixel value b of a second preset number of succeeding sampling points after each of the sampling points labeled with the first identifier, and taking the sampling point as the first target pixel when the average pixel value $a$ is greater than a first preset threshold and the average pixel value $b$ is less than a second preset threshold, wherein the first and second preset thresholds each range from 0 to 1.

7. The method of claim 6, wherein the step of selecting the sampling points labeled with the second identifier and meeting the second preset condition as the second target pixels comprises:

   obtaining pixel values of the sampling points within the edge region; and
   calculating an average pixel value c of a third preset number of preceding sampling points before each of the sampling points labeled with a second identifier, and an average pixel value d of a fourth preset number of succeeding sampling points after each of the sampling points labeled with the second identifier, and taking the sampling point as the second target pixel when the average pixel value c is greater than a third preset threshold and the average pixel value d is less than a fourth preset threshold, wherein the third and fourth preset thresholds each range from 0 to 1.

8. The method of claim 1 or claim 2, wherein the step of obtaining the coordinates of the center point of each of the regions of interest based on the segmented regions of interest comprises:

   calculating coordinates of a center of the largest inscribed circle of the region of interest based on the lumen edges of the region of interest; and
   determining the coordinates of the center point of the region of interest based on the center coordinates.

9. The method of claim 8, wherein the step of determining the coordinates of the center point of the region of interest based on the center coordinates comprises:

   taking the center coordinates as the coordinates of the center point of the region of interest; or
   taking the center coordinates of a first frame of the intravascular ultrasound images as the coordinates of the center point of the first frame, determining coordinates in a current frame of the intravascular ultrasound images corresponding to the coordinates of the center point in a previous frame of the intravascular ultrasound images, obtaining coordinates of all pixels within a preset range around the corresponding coordinates in the current frame, calculating a minimum distance between each of the pixels and the lumen edge of the region of interest based on the coordinates of the pixels to obtain a first distance set; and
   determining the coordinates of the pixel corresponding to the maximum distance value in the first distance set as the coordinates of the center point of the region of interest in the current frame.

10. The method of claim 9, wherein the step of constructing the center line of the blood vessel based on all the obtained coordinates of the center points comprises:
    performing polynomial fitting on the coordinates of the center points to obtain the center line of the blood vessel.

11. The method of claim 1, wherein the step of reconstructing the blood vessel by arranging each of the intravascular ultrasound images along the centerline in the preset order comprises:

    arranging each of the intravascular ultrasound images along the centerline frame by frame, wherein the arranged intravascular ultrasound images are orthogonal to the centerline; and
    filling three-dimensional space between each of the intravascular ultrasound images using an interpolation method to obtain the reconstructed three-dimensional model of the blood vessel.

12. The method of claim 11, wherein the step of filling the three-dimensional space between each of the intravascular ultrasound images using the interpolation method to obtain the reconstructed three-dimensional model of the blood vessel comprises:
    filling the three-dimensional space between each of the intravascular ultrasound images using quadratic linear interpolation or cubic B-spline interpolation to obtain the reconstructed three-dimensional model of the blood vessel.

13. A blood vessel reconstruction apparatus, comprising:

    a receiving module configured to obtain intravascular ultrasound images of a target object;
    a processing module configured to binarize each of the intravascular ultrasound images to obtain corresponding binary images;
    a segmentation module configured to traverse pixels of each of the binary images to select the pixels that meet a preset condition as target pixels, and delineate lumen edges of a blood vessel based on the target pixels to obtain segmented regions of interest;
    a centerline construction module configured to obtain coordinates of a center point of each of the regions of interest based on the segmented regions of interest, and construct a center line of the blood vessel based on all the obtained coordinates of the center points; and

a blood vessel reconstruction module configured to reconstruct the blood vessel by arranging each of the intravascular ultrasound images along the centerline in a preset order.

14. A computer device, comprising a memory and a processor, wherein the memory stores a computer program, and the processor, when executing the computer program, implements steps of the method according to any one of claims 1 to 12.

15. A computer-readable storage medium having a computer program stored thereon, wherein the computer program, when executed by a processor, implements steps of the method according to any one of claims 1 to 12.

FIG. 1

Obtaining intravascular ultrasound images of a target object — S202

Binarizing each of the intravascular ultrasound images to obtain corresponding binary images — S204

Traversing pixels of each of the binary images to select the pixels that meet a preset condition as target pixels, and delineating a lumen edge of a blood vessel to obtain a segmented region of interest — S206

obtaining coordinates of a center point of each region of interest based on the segmented regions of interest — S208

Constructing a centerline of the blood vessel based on all the obtained coordinates of the center points — S210

Reconstructing the blood vessel by arranging each of the intravascular ultrasound images along the centerline in a preset order — S212

FIG. 2

Extracting a plurality of pixels from the intravascular ultrasound image or a sharpened image of the intravascular ultrasound image as sample pixels ⌇ S302

Selecting two initial center pixels from the sample pixels, and calculating similarities between each initial center pixel and each sample pixel other than the initial center pixels ⌇ S304

Classifying the sample pixels according to the similarities ⌇ S306

Labeling each sample pixel according to the classification result to obtain the binary image. ⌇ S308

FIG. 3

(a)          (b)          (c)          (d)          (e)

FIG. 4

Selecting a plurality of pixels from each scan line as sampling points — S502

Traversing the sampling points on each scan line to select the sampling points labeled with a first identifier and meeting a first preset condition as first target pixels — S504

Identifying edge regions of a catheter and halo artifact in each of the binary images based on the first target pixels — S506

Selecting the sampling points labeled with a second identifier and meeting a second preset condition as second target pixels from the scan lines within the edge region — S508

Delineating the lumen edge of the blood vessel according to the second target pixels — S510

FIG. 5

FIG. 6

FIG. 7

| Receiving module | Processing moudle | Segmentation module | Centerline construction module | Blood vessel reconstruction module |

FIG. 8

FIG. 9

## INTERNATIONAL SEARCH REPORT

| International application No. |
| --- |
| **PCT/CN2024/071317** |

### A. CLASSIFICATION OF SUBJECT MATTER

G06T 17/00(2006.01)i; G06T 7/00(2017.01)i; G06T 7/11(2017.01)i

According to International Patent Classification (IPC) or to both national classification and IPC

### B. FIELDS SEARCHED

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 血管, 管腔, 超声, 成像, 重建, 二值化, 边缘, 边界, 感兴趣区域, 分割, 选取, 中心点, 圆心, 中心线, blood, vessel, imaging, reconstruct, intravascular, ultrasound, central, point, line, binarization, region of interest, ROI, segment

### C. DOCUMENTS CONSIDERED TO BE RELEVANT

| Category* | Citation of document, with indication, where appropriate, of the relevant passages | Relevant to claim No. |
| --- | --- | --- |
| PX | CN 115965750 A (MICROIMAGING (SHENZHEN) MEDICAL EQUIPMENT CO., LTD.) 14 April 2023 (2023-04-14) <br> description, paragraphs [0029]-[0116], and claims 1-14 | 1-15 |
| Y | CN 113724377 A (HANGZHOU SHENGSHI TECHNOLOGY CO., LTD.) 30 November 2021 (2021-11-30) <br> description, paragraphs [0013]-[0079], and claims 10-11 | 1-4, 8-15 |
| Y | WO 2021251425 A1 (TOHOKU UNIVERSITY) 16 December 2021 (2021-12-16) <br> description, paragraphs [0027]-[0033] | 1-4, 8-15 |
| A | CN 103462646 A (ZHEJIANG UNIVERSITY) 25 December 2013 (2013-12-25) <br> entire document | 1-15 |
| A | CN 113706684 A (EDAN INSTRUMENTS, INC.) 26 November 2021 (2021-11-26) <br> entire document | 1-15 |
| A | CN 114693710 A (SONOSCAPE MEDICAL CORP.) 01 July 2022 (2022-07-01) <br> entire document | 1-15 |

☑ Further documents are listed in the continuation of Box C.   ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **07 April 2024** | **10 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/071317** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022020215 A1 (OXFORD UNIVERSITY INNOVATION LIMITED) 20 January 2022 (2022-01-20)<br>entire document | 1-15 |

Form PCT/ISA/210 (second sheet) (July 2022)

**INTERNATIONAL SEARCH REPORT**
Information on patent family members

International application No.

**PCT/CN2024/071317**

| Patent document cited in search report | | | Publication date (day/month/year) | Patent family member(s) | | | Publication date (day/month/year) |
|---|---|---|---|---|---|---|---|
| CN | 115965750 | A | 14 April 2023 | None | | | |
| CN | 113724377 | A | 30 November 2021 | None | | | |
| WO | 2021251425 | A1 | 16 December 2021 | US | 2023225691 | A1 | 20 July 2023 |
| | | | | JP | WO2021251425 | A1 | 16 December 2021 |
| CN | 103462646 | A | 25 December 2013 | None | | | |
| CN | 113706684 | A | 26 November 2021 | None | | | |
| CN | 114693710 | A | 01 July 2022 | None | | | |
| US | 2022020215 | A1 | 20 January 2022 | GB | 201819596 | D0 | 16 January 2019 |
| | | | | WO | 2020109813 | A1 | 04 June 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310255062